# EUROPEAN PATENT SPECIFICATION

(11) **EP 4 273 889 B1**
(45) Date of publication and mention of the grant of the patent: **09.04.2025**
(21) Application number: 22171225.0
(22) Date of filing: 02.05.2022
(51) Int. Cl.: G21K 1/00, G06N 10/40

(54) **SYSTEM AND METHOD FOR CONSTRUCTING AN ARRAY OF COLD NEUTRAL ATOMS**
SYSTEM UND VERFAHREN ZUR HERSTELLUNG EINER ANORDNUNG VON KALTEN NEUTRALEN ATOMEN
SYSTÈME ET PROCÉDÉ DE CONSTRUCTION D'UN RÉSEAU D'ATOMES NEUTRES À FROID

(43) Date of publication of application: 08.11.2023
(73) Proprietor: AtomQL d.o.o., 1000 Ljubljana (SI)
(72) Inventor: BABIC , Dusan, 1215 Medvode (SI); JEGLIC , Peter, 1000 Ljubljana (SI); ZUPANCIC, Erik, 1000 Ljubljana (SI); POBERAJ, Igor, 1000 Ljubljana (SI)
(74) Representative: Jersan, Tatjana

(56) References cited:
- BROWN M O ET AL: "Scaling atom array assembly with grey molasses", ARXIV.ORG, CORNELL UNIVERSITY LIBRARY, 201 OLIN LIBRARY CORNELL UNIVERSITY ITHACA, NY 14853, 4 November 2018 (2018-11-04), XP081045844
- LAMBRECHT ALEXANDER ET AL: "Long lifetimes and effective isolation of ions in optical and electrostatic traps", NATURE PHOTONICS, NATURE PUBLISHING GROUP UK, LONDON, vol. 11, no. 11, 31 October 2017 (2017-10-31), pages 704 - 707, XP036429686, ISSN: 1749-4885, [retrieved on 20171031], DOI: 10.1038/S41566-017-0030-2
- MICHA{\L} TOMZA ET AL: "Cold hybrid ion-atom systems", ARXIV.ORG, CORNELL UNIVERSITY LIBRARY, 201 OLIN LIBRARY CORNELL UNIVERSITY ITHACA, NY 14853, 25 August 2017 (2017-08-25), XP081467085, DOI: 10.1103/REVMODPHYS.91.035001

## Description

The invention belongs to the field of devices and methods for constructing cold neutral atom arrays with a predefined architecture. Such arrays can be used in several applications, such as quantum computers, quantum simulators, quantum metrology applications or quantum sensors as disclosed in Kaufman2021 [10].

The goal of the present invention is to design a system and a method for quick, reliable and repeatable construction of a defect free array of cold neutral atoms with a predefined architecture, where preferably all atoms are in the same quantum state.

### State of the art

There are two known ways of atom array construction that are suitable, for example, for quantum computation, namely arrays of cold ions and arrays of cold neutral atoms.

How to construct an array of cold ions is disclosed in Paul1990 [13], Berkeland2002 [2], Akerman2011 [1], Dubost2012 [4], Pöschl2018 [15], Thompson2015 [20] and Heazlewood2019 [6] where ions within a vacuum chamber are captured by a radio frequency (rf) trap and laser cooled to typically less than few 10mK, to form a Coulomb crystal. A particular cold ion is held in place within the crystal, namely in a particular rf trapping site, by the forces of electric field of the rf trap and electric field from the neighboring cold ions within the crystal, i.e., by the Coulomb repulsion between the ions. Typical spacing between the neighboring cold ions in such arrays are in the order of a few µm to a few 10µm. The structure of such array can be defined by the architecture of a rf trapping means generating the rf trap with a particular geometry of the rf trapping sites. Particular architectures of linear rf traps (tunnels) where cold ions self-arrange into a simple linear or zig-zag chain structures are disclosed in Akerman2011 [1], Berkeland2002 [2], Brownnut2007 [3], Dubost2012 [4], Pöschl2018 [15], Hempel2014 [7], Pokorny2014 [14].

Main advantages of thus constructed cold ion arrays and their methods are as follows: (a) it is relatively easy to trap particular ions from the cloud into the rf trap; and (b) due to Coulomb repulsion, the cold ions exhibit self-arranging properties, so that faultless array of cold ions with architecture defined by the rf trapping sites geometry is easily achieved. Due to robustness and reliability of the process usually no additional steps of checking the array for its accuracy is necessary before using the array in practical applications.

The construction of cold neutral atom arrays within an ultra-high vacuum chamber is also known (Kaufman2021 [10], Schlosser2001 [18], Schäfer2020 [16]). In order to capture the neutral atoms into the array, they should be cooled to sufficiently low temperatures, usually by laser cooling. The cold neutral atoms are captured and held within the array with the predefined structure by the optical traps generated by, for example, optical tweezers. When constructing the array of cold neutral atoms, faults in the array, e.g. missing atoms, are highly likely due to statistical nature of capturing cold atoms in the optical traps. Therefore, before using the array of cold neutral atoms in practical applications, usually a process of verifying its accuracy is necessary, which renders the entire process less efficient and slower. The advantage of capturing the cold neutral atoms by optical tweezers is that manipulation of individual cold neutral atoms within the array by moving optical tweezers has less constraints, one of the reasons being that there is virtually no interaction between the cold neutral atoms. Consequently, shorter distances between atoms can be achieved in the array of cold neutral atoms.

The arrays of cold ions have some disadvantages in comparison to arrays of cold neutral atoms, in terms of their limited possibilities of application. For example, shorter distances between individual atoms that can be achieved in the array of cold neutral atoms are advantageous for quantum computation, because with shorter distances it is easier to achieve entanglement between the individual atoms, which is necessary for quantum "programming". Furthermore, in quantum computing or quantum simulations it is desirable to work with more complex arrays, for example 2D or 3D arrays, because each atom within such array has more neighboring atoms than in one dimensional array (e.g. a line), so there are more entanglement possibilities of the neighboring atoms, and consequently possibilities of quantum "programming" are significantly increased. It is much easier to assemble more complex arrays, that are constructed from cold neutral atoms, than from cold ions which are usually trapped in the rf trap in a single line structure, because cold neutral atoms can be held in place by optical traps which in general exhibit greater flexibility than rf traps.

The attribute "cold", used throughout this application in relation to "cold ions" or "cold neutral atoms", is to be understood as a property of ions / atoms having a kinetic energy sufficiently low so that these ions / atoms can be trapped and/or that they can be kept trapped within rf traps and/or optical traps.

### System

The method and the system according to the present invention combine both known methods and devices for assembling cold ion/neutral atom arrays, and their respective advantages, in order to construct quickly an array of cold neutral atoms which is defect free, so no subsequent verification is necessary, and also enable automatic and iterative assembly of more complex arrays of cold neutral atoms.

The invention is further described with reference to the following drawings:
Figure 1 shows schematically an embodiment of the system
Figure 2 shows a detail of the system, namely radio frequency (rf) traps with eight trapped cold ions overlaid with optical traps, namely optical trapping beams from the optical trapping means
Figure 3 shows examples of (a) the geometry of a primary structure of an array of cold ions / cold neutral atoms, (b) a secondary (compacted) structure of the cold neutral atoms and (c) a final array of the cold neutral atoms
Figure 4 shows a table in which the method according to this invention for the embodiment, shown in Figures 1 and 2, is schematically represented with particular time intervals and when particular devices of the system are active shown as hatched cells of the table
Figure 5 shows an embodiment of a calibration plate used in the calibration procedure of the embodiment of the system shown in Figures 1 and 2
Figure 6 shows signals from a photodetector during calibration procedure

The system 1 for constructing an array of cold neutral atoms according to the present invention comprises the following:
- a vacuum chamber 2, within which ultra-high vacuum can be achieved;
- ion source 3 configured for populating the vacuum chamber 2 with ions 6;
- radio frequency (rf) trapping means 8, generating rf trap 9 with a predefined geometry of rf trapping sites 10, configured for capturing ions in the vacuum chamber 2 into the array with a primary structure 16 defined by the rf trapping sites 10, and/or for keeping the cold ions in place within the primary structure 16;
- optical trapping means 11, generating optical traps 12, configured for double trapping already trapped cold ions 6 in the primary structure 16 and/or for holding the cold ions 6 and/or the cold neutral atoms 21 in place within the primary structure 16, and optionally for enabling movement of each cold neutral atom 21 or a group of cold neutral atoms 21 by moving the corresponding optical traps 12;
- cooling means 7 configured for cooling the ions 6 and/or neutral atoms 21 within the vacuum chamber 2 to sufficiently low temperature, for example by laser cooling, sympathetic cooling and/or rf cooling, in order for the cold ions 6 / cold neutral atoms 21 to be trapped and/or kept in an ordered structure in the rf trapping sites 10 and/or in the optical traps 12;
- neutralization means 13, comprising a source of electrons configured for creating a controlled flux of electrons, for neutralizing cold ions 6 that are trapped and held in place in the primary structure 16 by the optical trapping means 11 and optionally also by the rf trapping means 8.

The vacuum chamber 2 is designed to achieve an ultra-high vacuum, in order to enable all the processes according to the present invention of assembling the array of cold neutral atoms. Typical value of the pressure inside the vacuum chamber 2 is below 1×10⁻⁹ mbar. The vacuum chamber 2 has sufficient optical access for the devices of the system 1, for example the cooling means 7 and the optical trapping means 11. For example, the vacuum chamber 2 comprises the following ports 15: a low numerical aperture (NA) port 15a for the cooling means 7, which is implemented as laser cooling means, two high NA ports 15c and 15d for the optical trapping means 11, and a port 15f for the neutralization means.

The ion source 3 emits the positively charged ions (cations) of a particular atom species into the vacuum chamber 2, preferably in a beam of ions 5 towards the rf trap 9, in a controlled way. Preferably, all emitted ions have the same electric charge. In one of possible embodiments of the system 1, a Strontium (Sr) atom source described in Schioppo2012 [17] in combination with photoionization diode-lasers disclosed in Vant2006 [22] may be used as the ion source 3.

Species of atoms that are suitable as building blocks of the array assembly according to the present invention should satisfy the following requirements: in their ionized state they should be suitable to be trapped and held in place by the optical trapping means 11 and by the rf trapping means 8 and suitable to be cooled by laser or other means; and in their neutral state they should be suitable to be trapped and held in place by the optical trapping means 11. For example, alkaline-earth atoms from the second group of periodic system, particularly Strontium (Sr), and alkaline-earth-like atoms, particularly Ytterbium (Yb), are suitable for this purpose, as disclosed in Karpa2019 [9]. Sr and Yb are particularly suitable because the array constructed according to the present invention can be applied for quantum simulator and/or quantum computers as described in Kaufman2021 [10], where optically trapped cold neutral atoms are excited to Rydberg states, as disclosed in Morgado2021 [12] and Henriet2020 [8].

The cooling means 7 is designed to cool the ions, and/or subsequently the neutral atoms, within the vacuum chamber 2. The cooling to sufficiently low temperature is required in order to reduce the kinetic energy of the ions 6 and/or neutral atoms 21, so that they can be trapped and held in place in ordered structure by the rf trapping means 8 and/or by the optical trapping means 11. In general, the ions 6 and/or neutral atoms 21 may be cooled by the cooling means 7 while they are passing through the vacuum chamber 2, once they are trapped by the rf trapping means 8 and/or by the optical trapping means 11, and/or also after they are neutralized and kept within the primary structure 16 only by the optical trapping means 11.

Once the ions 6 are trapped into the rf trap 9, the cooling is necessary to (further) reduce their kinetic energy in order to form an ordered structure thus defining the rf trapping sites 10, and to further reduce their kinetic energy in order to be held within the optical traps 12 before, during and after the neutralization step.

The cooling means 7 can be implemented in various known ways, for example by laser cooling as disclosed in Metcalf [11], sympathetic cooling as disclosed in Tomza2019 [21], or rf cooling as disclosed in Sriarunothai2017 [19].

The rf trapping means 8 generates the rf trap 9 with the rf trapping sites 10, into which cold free ions 6 are captured. The geometry of the primary structure 16 of the array is defined by the geometry of the rf trapping sites 10. The primary structure 16 may contain one single cold ion/cold neutral atom or more. One possible geometry of the primary structure 16 known in the state of the art (Paul1990 [13], Berkeland2002 [2]) is a line of a few to a few ten cold ions. In order to enable required optical access to the trapped ions 6 and provide a trapping potential depth of a few ten eV, the blade shaped design of the rf trapping means 8 may be applied as disclosed in Hempel2014 [7], Pokorny2014 [14], He2021 [5]. Preferably, the distance between the neighboring rf trapping sites 10 within the primary structure 16 is in the order of 10 µm, so that the Coulomb repulsion between the cold ions does not destroy the primary structure 16 in embodiments where, before the neutralization, the cold ions 6 are held in place within the primary structure 16 only by the optical trapping means 11.

The optical trapping means 11 generates the optical traps 12 within the vacuum chamber 2 by optical trapping beams 11f, wherein the optical traps 12 have essentially the same geometry as the rf trapping sites 10, namely that of the primary structure 16. Once the ions 6 are trapped into the primary structure 16 of the rf trap 9 and held in place by the rf trapping means 8 in the rf trapping sites 10, the trapped cold ions 6 are overlaid by the optical traps 12 of the optical trapping means, so double-trapping of the cold ions 6 is achieved.

The optical trapping means 11 can be implemented, for example, as optical tweezers.

The rf trap 9 exerts stronger force on the cold ions 6 to keep them in the primary structure 16, so the temperature (kinetic energy) of the ions 6 can be higher than the temperature of the cold ions 6 and the cold neutral atoms 21 held in place only by the optical trapping means 11 which exerts weaker force on the cold ions 6 and the cold neutral atoms 21 to keep them in the optical traps 12. That is why the neutralization process is initiated only after the cold ions 6 within the primary structure 16 are sufficiently cooled by the cooling means 7.

The neutralization means 13 comprises a source of electrons 13a to create a controlled flux of electrons, optionally also focusing electrodes to create a neutralization beam 13b of electrons, directed toward the cold ions 6, which are trapped in the primary structure 16 by the rf trapping means 8 and/or by the optical trapping means 11, in order to neutralize the cold ions through electron-ion recombination. A skilled person in the art can appropriately adjust operating parameters of the neutralization means 13, such as electron energy, electron monochromaticity, electron flux (current), electron density (beam diameter) and the direction of the flux of electrons, depending on particular embodiments of the system and the method according to the present invention, in order to achieve reliable neutralization of all cold ions 6 within the primary structure 16 as quickly as possible, thus generating neutral atoms 21, while preserving the geometrical arrangement of the neutral atoms 21 in the primary structure 16, and to achieve that the neutralized atoms 21 are in such quantum state to allow the cold neutral atoms 21 to be held within the optical traps 12 and to prevent the optical trapping beams 11f to re-ionize them.

The wavelength and intensity of the optical trapping beams 11f should be selected appropriately so that for practical purposes they do not re-ionize the neutralized atoms 21 during or after the neutralization.

Once the cold neutral atoms 21 are kept in place within the primary structure 16 by the optical trapping means 11, further manipulation of the geometry of the structure is possible, because the optical trapping means 11 enable such spatial movement of each cold neutral atom 21 or a group of individual cold neutral atoms 21 by moving the corresponding optical traps 12.

For example, in one possible application of the array of the cold neutral atoms 21, namely for quantum computation, in which it is desired that the distances between neighboring cold neutral atoms 21 are in range of µm, the geometry of the primary structure 16 can be changed into a secondary structure 17, where the distance between neighboring cold neutral atoms 21 is significantly reduced, so, for example, that the cold neutral atoms 21 can be entangled via Rydberg interactions. Furthermore, given that the neighboring cold ions 6 in the primary structure 16 (in the rf trapping sites 10) held in place by the rf trap 9, are not necessarily at equal distances, and consequently neither are the neighboring neutral atoms 21 in the primary structure 16, the secondary structure 17 can also be used to structure the cold neutral atoms 21 equidistantly.

Furthermore, the array of cold neutral atoms 21 in the primary structure 16 or the secondary structure 17, which typically is a line (i.e. one-dimensional structure), can be combined into more complex final array 18, so for example to form longer one-dimensional structures, arbitrarily shaped two-dimensional structures or even three dimensional structures to be used in different applications. Additional optical traps for the final array 18 can either be formed by the optical trapping means 11 or by additional optical trapping means (not shown in Figures).

Optionally, the system 1 comprises also a high-resolution camera 14 in combination with a high numerical aperture (NA) optics 11e, with NA sufficiently high configured for imaging individual cold ions 6 in the rf trapping sites 10 and/or in the optical traps 12 and/or individual cold neutral atoms 21 in the optical traps 12. The high-resolution camera 14 is directed toward a trapping area, where the rf trapping sites 10 and the optical traps 12 are located, and possibly also toward a construction area, where, in some embodiments, the final array 18 of cold neutral atoms 21 is constructed, in order to monitor whether and to what extent the primary structure 16, secondary structure 17 and/or the final array 18 are filled with the cold ions 6 or cold neutral atoms 21. This is especially important in development phase of a particular embodiment of the system 1 and in calibration phase, where parameters of the system 1 are adjusted to achieve the required performance.

The system 1 comprises also an electronic control system (not shown in Figures) with processing, memory and connectivity capabilities, which is connected to the above-described devices of the system and on which the appropriate software modules can be run in order to carry out methods described below, in order to operate, monitor and control the system 1.

### Method

The method of constructing an array of cold neutral atoms 21 with the geometry of the primary structure 16, held in place by the optical traps 12, according to the present invention comprises the following steps:
- Step 1: controlled release of ions into the vacuum chamber 2, preferably in a beam 5 of ions directed toward the rf trapping sites 10.
- Step 2: trapping the ions 6 into the rf trap 9, and holding the cold ions 6 in place in the rf trapping sites 10, which define the primary structure 16 of the cold ions 6.
- Step 3: overlaying the cold ions 6, which are already held in place in the rf trapping sites 10 within the primary structure 16, with the optical traps 12, thereby double-trapping the cold ions 6, and holding them in place by the optical traps 12.
- Step 4: neutralizing the cold ions 6 within the primary structure 16 through electron-ion recombination, and thus generating the cold neutral atoms 21 within the primary structure 16.

**In** addition to the above mentioned four steps, a cooling step is necessary for cooling the ions/neutral atoms in order to reduce their kinetic energy (temperature), namely for the ions 6 to be trapped, achieve a stable structure and kept in place in the primary structure 16 by the rf trap 9, and for the cold ions 6 and the cold neutral atoms 21 to be kept in place within the optical traps 12. The cooling step can be continuous or comprise intervals of cooling, and can run simultaneously with the above mentioned four steps and/or can run between or after each of these steps. The starting point and duration of the cooling step or its intervals depend on parameters of a particular embodiment of the system 1, such as the kinetic energy of the ions/neutral atoms and the depth of the rf trap 9 and the optical traps 12.

For example, in certain embodiments the ions 6, when released from the ion source 3, have sufficiently low kinetic energy (temperature) and the rf trap 9 is designed to have sufficient depth, i.e. to exert sufficient electric force, to capture the ions 6 floating in the vacuum chamber 2 without any cooling. However, the ions 6 should always be cooled to achieve their ordered structure within the rf trap 9. Given that in general the optical traps 12 have significantly lower depth than the rf trap 9 and are not able to hold in place uncooled ions 6 / neutral atoms 21, the cooling step should always be initiated before the neutralization step is concluded, namely before the neutral atoms 21 are kept in place merely by the optical traps 12, so that once the neutral atoms 21 are to be kept in place merely by the optical traps 12, they have sufficiently low kinetic energy.

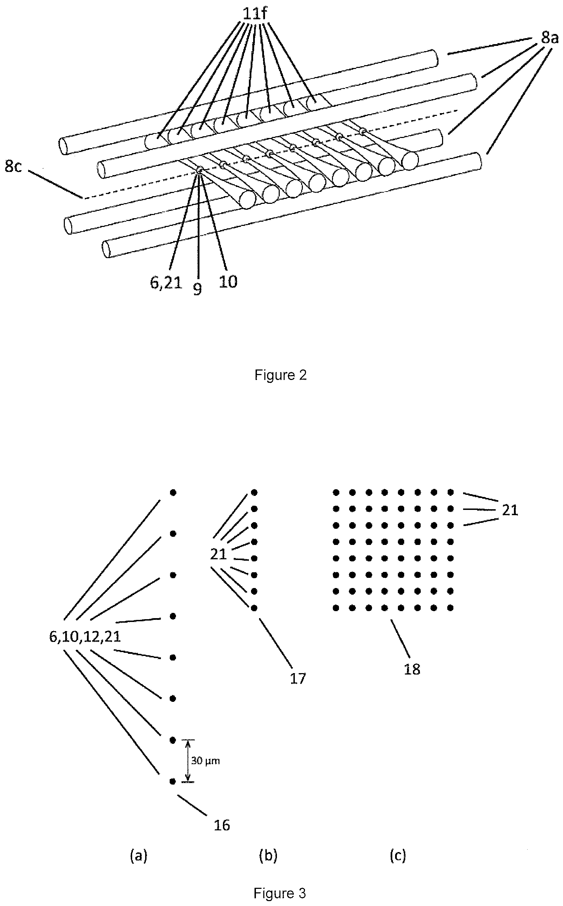

The above-described method, after completion of step 4 and the cooling step, yields an array of cold neutral atoms 21 held in place by the optical traps 12 in a predefined geometry, namely that of the primary structure 16, an example of which is shown in Figure 3a.

Step 1 is achieved by the ion source 3, step 2 is achieved by the rf trapping means 8, step 3 is achieved by the optical trapping means 11, step 4 is achieved by the neutralization means 13, and the cooling step is caried out by the cooling means 7.

Step 3 can be achieved by switching on the optical trapping means 11 only after step 2 and the cooling step are completed, or can be achieved with the same result also if the optical trapping means 11 are switched on earlier, for example already during step 1 or 2. In other words, some of the steps described above can more or less overlap in time depending on a particular embodiment.

Preferably, step 2 is ended by switching off the rf trapping means 8, immediately before initiating step 4 because the rf trapping means 8, if switched on, may interfere with the neutralization beam 13b of electrons from the neutralization means 13, and therefore interfere with the neutralization of the cold ions 6.

Optionally, additional steps are possible after step 4 and the cooling step to achieve various arrays that are more suitable for particular applications. For example, an additional step to reshape the primary structure 16 into a more compact secondary structure 17 by moving the corresponding optical traps 12, namely to achieve the reduction of the distances between neighboring cold neutral atoms 21 within the secondary structure 17, and example of which is shown in Figure 3b.

Further additional steps are possible after step 4 and the cooling step, or after above mentioned additional steps, to construct more complex final arrays 18 of cold neutral atoms 21 by combining the arrays in the shape of the primary structure 16 or the secondary structure 17. The steps of constructing the final array 18 includes moving the cold neutral atoms 21 in the primary structure or in the secondary structure from the trapping area into the construction area, both within the vacuum chamber 2. In the construction area the cold neutral atoms 21 are held in place by the additional optical traps produced by the optical trapping means 11 or by additional optical trapping means (not shown in Figures). In order to reduce time of the construction of the final array 18, the additional steps of moving the primary structure 16 or secondary structure 17 from the trapping area to the construction area may run simultaneously with the next iteration of the above-mentioned method, namely steps 1 to 4 and the cooling step.

During or after step 2 a verification step can be added, carried out by imaging the cold ions 6 in the rf trapping sites 10 and/or in the optical traps 12 by the high-resolution camera 14, to check whether and to what extent the rf trapping sites 10 and/or the optical traps 12 are filled with the cold ions 6.

During or after step 3 an additional verification step can be added, carried out by imaging the cold neutral atoms 21 in the optical traps 12 by the high-resolution camera 14, to check whether and to what extent the optical traps 12 are filled with the cold neutral atoms 21. The imaging of the cold ions 6 and/or cold neutral atoms 21 in the rf trapping sites 10 and/or in the optical traps 12 can be used also in calibration procedures.

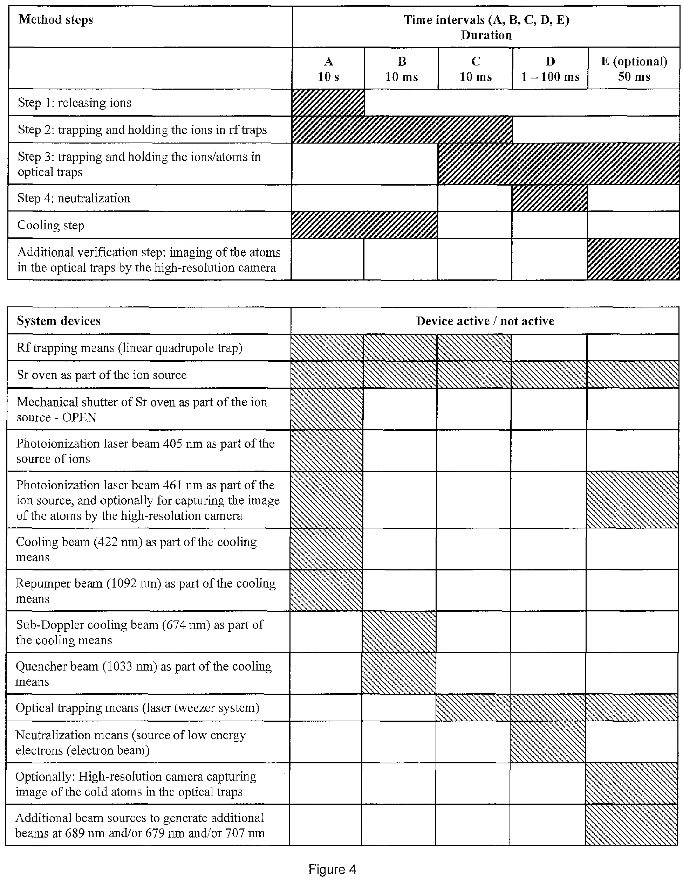

The inventive method is not limited to carrying out the individual method steps in a sequential manner or as shown in the preferred embodiment of Figure 4. Rather, the inventive method encompasses carrying out two or more essential and/or optional method steps in parallel or at least partially overlapping in time. For example, the cooling step can be employed at all times, for example in parallel or partially overlapping with any of the essential and/or optional method steps.

The inventive method is not limited by time durations of individual steps, e.g. by those exemplified in Figure 4. Rather, the inventive method encompasses carrying out the individual steps in time intervals of any duration being suited to the actual circumstances. In most applications of the method, it is preferable, that these steps are carried out in as short time intervals as practically achievable, which is particularly advantageous, for example, for use in quantum computing.

### Embodiment - system

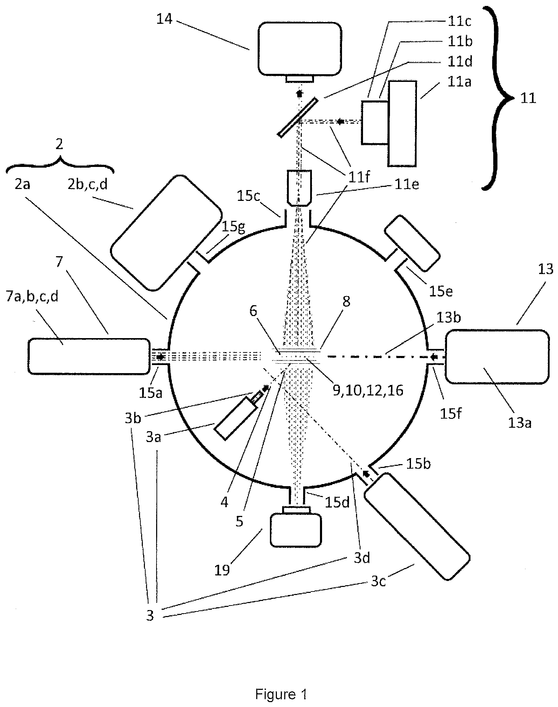

An embodiment of the system 1 according to the present invention shown in Figure 1 and 2 produces the array of the cold neutral atoms 21 with geometry of the primary structure 16 with eight cold neutral atoms 21 positioned in a line. The primary structure 16 is shown also in Figure 3a.

In this embodiment the vacuum chamber 2 is implemented as a cylindrical stainless-steel chamber 2a with base pressure less than 1×10⁻⁹ mbar in combination with a vacuum pumping system comprising an ion pump 2b and a titanium sublimation pump 2c, and vacuum gauges 2d.

The ion source 3 is implemented as a combination of a Strontium (Sr) oven 3a, with a mechanical shutter 3b, placed inside the vacuum chamber 2, and a photoionization laser system 3c generating two photoionization laser beams of wavelengths of 461 nm and 405 nm, respectively, for two-photon ionization of hot Sr atoms. The photoionization laser beams 3d are directed to intersect the path of a beam 4 of hot Sr atoms from the outlet of the Sr oven 3a to the rf trapping sites 10. After ionization the beam 5 of Sr+ ions proceeds toward the rf trapping sites, where some of the Sr+ ions are trapped therein. The Sr oven 3a comprises a resistive heated filament and a Sr dendrite of 5N purity in a stainless-steel housing, and has an integrated collimation tube of 1 mm diameter and 5 mm in length which collimates the beam 4 of hot Sr atoms with temperature of over 450° C, which is directed toward the rf trapping sites 10. The mechanical shutter 3b with on/off function is used to control the beam 4, 5 of the Sr atoms/ions, i.e. to control the loading of the rf trap 9.

The rf trapping means 8 is implemented as a linear quadrupole trapping system 8 comprising four longitudinal rod electrodes 8a and two on-end electrodes (not shown in Figure 1 and 2). The rf trapping means 8 is designed to generate a rf trap 9 with eight rf trapping sites 10 for eight Sr+ ions 6 in a linear primary structure 16 along its central axis 8c. The rf trap 9 has a minimum trap depth well above the mean kinetic energy of ions in the Sr+ ion beam 5, namely of the order of 10 eV. The design of the linear quadrupole trapping system 8 allows high optical access to the rf trapping sites for the beam 5 of Sr+ ions from the ion source 3, for the cooling means 7, for the optical trapping means 11, for the high-resolution camera 14, and for a neutralization beam 13b of electrons from the neutralization means 13.

The cooling means 7 is implemented as four laser cooling systems, namely a laser cooling system 7a generating cooling beam of wavelength of 422 nm, a repumper laser system 7b generating 1092 nm repumper beam, a sideband cooling laser system 7c generating 674 nm sideband cooling beam, and a quencher laser system 7d generating 1033 nm quencher beam. All these beams are directed toward the rf trapping sites 10, namely toward the central axis 8c of the rf trapping means 8. The first two laser cooling systems 7a, 7b are used to cool the trapped ions 6 close to Doppler limit of about 0.48 mK. The second two laser cooling systems 7c, 7d are used for cooling the trapped ions 6 close to final sub-Doppler temperature limit of about 0.2 µK. This temperature allows the cold ions 6 to form ordered linear chain in the rf trapping sites 10 and to be held in place by the optical trapping means 11, and also allows, after neutralization, the cold neutral atoms 21 to be held in place by the optical trapping means 11 for extended periods of time (>1 min).

The neutralization means 13 is implemented as a source of low energy electrons 13a capable of generating various electron beams with electron monochromaticity < 0.5 eV, electron energies between 0.1 eV and 100 eV, and beam current (flux) between 1 nA and 1 mA, which allows the selection of appropriate operating parameters for the neutralization beam 13b of electrons. The operating parameters of the neutralization means 13, which should be adjusted to this particular embodiment of the system, are electron energy, electron flux (current), electron density (beam diameter) and the direction of the neutralization beam 13b of electrons in order to achieve reliable neutralization of all cold ions 6 within the primary structure 16 as quickly as possible, while preserving the geometrical arrangement of the cold neutral atoms 21 in the primary structure 16, and to achieve that the neutralized atoms 21 are in the quantum state to be held within the optical traps 12 and that the optical trapping beams 11f do not re-ionize them.

The optical trapping means 11 in this embodiment comprises a laser tweezer system 11a, generating the optical trapping beams 11f with wavelength of 515-nm, a dichroic mirror 11d and a high numerical aperture (NA) optics 11e with NA > 0.5. The laser tweezer system 11a comprises two crossed acousto-optic deflectors (AOD) 11b and motorized lens 11c. The AODs 11b split an initial laser beam into eight separate optical trapping beams 11f and are also used to steer the optical trapping beams 11f independently from one another, which consequently enable the optical traps 12 to be independently steered within the vacuum chamber 2. Each AOD 11b is used to steer the optical trapping beams 11f independently from one another along one axis (x or y axis), so two crossed AODs 11d enable the steering of the optical trapping beam 11f in an xy target plane. The motorized lens 11c is used to focus the optical trapping beams 11f at a certain distance from the optical trapping means 11 (i.e. along z axis), thereby defining the distance of the xy target plane from the optical trapping means 11. The high NA optics 11e with NA > 0.5 is used within the context of the optical trapping means 11 to focus the optical trapping beams 11f thereby defining the diameter of the optical traps 12. The optical trapping beams 11f are directed toward the rf trap 9 in the vacuum chamber 2. The steering of the optical traps 12 is necessary to achieve their spatial overlaying with the rf trapping sites 10 and possibly to move the optical traps 12 with cold neutral atoms 21 to create more compact structure, namely the secondary structure 17, or to move the primary structure 16 or the secondary structure 17 from the trapping area to the construction area to construct the final array 18 as mentioned above. To accomplish that the rf trapping sites 10 are spatially overlaid by the optical traps 12 in this embodiment of the system 1, a calibration procedure is necessary, and is described below.

The dichroic mirror 11d is used to allow the high NA optics 11e to be used for two purposes: to focus the optical trapping beams 11f, as mentioned above, and for imaging the cold ions 6 and/or cold neutral atoms 21 in the rf trapping sites 10 / optical traps 12 with the high-resolution camera 14 through the same optical port 15c in the vacuum chamber 2 wall as is used to introduce the optical trapping beams 11f into the vacuum chamber 2. The dichroic mirror 11d reflects the optical trapping beams 11f with wavelength of 515 nm from the laser tweezer system 11a towards the high NA optics 11e and accompanying optical port 15c through which the optical trapping beams 11f enter the vacuum chamber 2. On the other hand, the dichroic mirror 11d transmits the light with the wavelengths of 422 nm for imaging the cold ions 6, and/or the light with the wavelengths of 461 nm and/or 689 nm for imaging cold neutral atoms 21, coming from the cold ions 6 / cold neutral atoms 21 in the rf trapping sites 10 and/or the optical traps 12 within the vacuum chamber 2 to the high-resolution camera 14.

This embodiment of the system 1 comprises the high-resolution camera 14 which is implemented as an electron-multiplied charge-coupled-device (EMCCD) camera 14 with the resolution of more than 1 Mpixel and high (single photon) sensitivity in combination with the high NA optics 11e. The EMCCD camera 14 is used to monitor whether the rf trapping sites 10 are filled with the cold ions 6 and whether the optical traps 12 are filled with the cold ions 6 or the cold neutral atoms 21. To image the cold ions 6 in the rf trapping sites 10 and/or in the optical traps 12, fluorescence imaging is applied by using the cooling beam at 422 nm and the repumper beam at 1092 nm. To image the cold neutral atoms 21 in the optical traps 12, fluorescence imaging is applied by using the photoionization laser beam at 461 nm and/or additional beams at 689 nm and/or 679 nm and/or 707 nm from additional beam sources not shown in Figure 1. A particular choice of the laser beams required for imaging the cold neutral atoms depends on the required fidelity and survival probability of the atom imaging.

For example, in a possible calibration process, the high-resolution camera 14 can be used to determine a time period in which the rf trapping sites 10 are entirely filled with the cold ions 6, namely by monitoring the rf trapping sites 10. The high-resolution camera 14 can also be used to determine time periods necessary for cooling the ions 6 or the neutral atoms 21. The temperature of the ions 6 / neutral atoms 21 in the traps can be measured with the high-resolution camera 14 indirectly, for example by switching off the rf trap 9 or the optical traps 12 and measuring the time evolution of ion/atom position. In the calibration process described below, the high-resolution camera 14 is used to determine the position of the optical traps 12 relative to the rf trapping sites 10, in order to adjust the position of the optical traps 12 to spatially overlay them with the rf trapping sites 10, including capturing the image of a calibration mask 20 used in the calibration process.

In this embodiment, the system 1 according to the present invention comprises a photodetector 19 which is used in the calibration process for calibrating the position of the optical traps 12, which is described below. The photodetector 19, can be implemented, for example, as a photodiode 19. The photodetector 19 is positioned on its optical port 15d on the same optical axis as the EMCCD camera 14 and the optical trapping beams 11f once they enter the vacuum chamber 2, but on the other side of the vacuum chamber 2 relative to the optical port 15c for the optical trapping means 11 as shown in Figure 1. The optical port 15d is also necessary for functioning of the optical trapping means 11.

In this embodiment, the vacuum chamber 2 has one optical port 15a for the laser cooling means, one optical port 15b for photoionization system 3c, one optical port 15c for the high-resolution camera and the optical trapping means, one optical port 15d for the photodetector 19, one port 15e for an electrical high-voltage radio-frequency feedthrough for the rf trapping means 8 and for the Sr oven 3a, one port 15f for the neutralization means 13, and a port 15g for the vacuum pumping system 2b and the vacuum gauges 2d.

### Embodiment - method

The method according to the present invention as implemented in the embodiment shown in Figures 1 and 2 is schematically shown in a table in Figure 4.

Columns to the right in the chart represent time intervals A, B, C, D and E, wherein interval A lasts 10 s, interval B 10 ms, interval C 10 ms, interval D is in the range of 1 to 10 ms, and optional interval E lasts 50 ms. The upper rows of the chart show during which time intervals A - E particular steps of the method according to the present invention, namely steps 1 - 4, the cooling step and the optional verification step, are carried out, which is shown as hatched cells in the table. The below rows of the chart show during which time intervals A - E particular devices of the system 1 are active, which is shown as hatched cells in the table.

For example, step 1, in which the ions 6 are released into the vacuum chamber 2 toward the rf trapping sites 10, is accomplished in interval A. To achieve that, during interval A the Sr oven 3a, emitting the Sr atoms, is switched on, the mechanical shutter 3b of the Sr oven 3a is open, and the photoionization laser system 3c, generating both photoionization laser beams, namely of wavelengths 461 nm and 405 nm, is active. For practical reasons, the Sr oven 3a is switched on during all intervals, and the flux of the Sr atoms is controlled by the mechanical shutter 3b.

Step 2, namely trapping and holding the ions 6 in the rf trapping sites 10, is carried out during intervals A, B and C. There is a short delay between releasing the ions 6 into the vacuum chamber 2 and trapping first ions 6 into the rf trap 9, which is not shown in the chart in Figure 4 due to relatively short duration and stochasticity of the delay. To accomplish step 3, the rf trapping means is switched on during intervals A, B and C.

Step 3, double-trapping and holding the cold ions 6 by the optical traps 12, and then holding the cold neutral atoms 21 by the optical traps 12, is carried out during intervals C, D and E. That is why the optical trapping means 11 is switched on during these three intervals. The optical trapping means 11 could be switched on during intervals A and B as well, because it would not interfere with other steps of the method.

Step 4, neutralization of the captured cold ions 6, is achieved during interval D, so the neutralization means 13 is active during this interval. During step 4, the cold ions 6, until they are neutralized, and then the cold neutral atoms 21, are held in place merely by the optical traps 12, because the rf trap 9 is no longer active. The rf trapping means 8 is switched off before initiation of step 4, because the electric field of the rf trapping means 8 can interfere with the neutralization beam 13b of electrons from the neutralization means 13.

The cooling step is carried out during intervals A and B by the cooling means 7. The ions 6 in the rf trap 9 are first cooled with the 422 nm cooling beam and 1092 nm repumper beam close to Doppler temperature limit of about 0.48 mK during interval A, and then with the 674 nm sub-doppler cooling beam and the 1033 nm quencher beam close to sub-Doppler temperature limit of approx. 0.2 µK during interval B.

In the chart in Figure 4, the optional verification step is shown, which is carried out during interval E, to verify whether the primary structure 16 comprising the cold neutral atoms 21, held in place by the optical traps 12, is defect free. During this interval, the high-resolution camera 14 captures the image of the cold neutral atoms 21 in the optical traps 12 by applying fluorescence imaging using the photoionization laser beam at 461 nm and/or additional beams at 689 nm and/or 679 nm and/or 707 nm, so in this interval the high-resolution camera 14 is active and so is the photoionization laser system 3c, but generating only the photoionization laser beam with the wavelength of 461 nm, and also the additional beam sources (not shown in Figure 1).

### Calibration procedure

The main purpose of the calibration procedure in this embodiment, according to the calibration method described below, is to spatially adjust the position of the optical traps 12, which is done by moving the optical trapping beams 11f and focusing them at various distances from the optical trapping means 11, or more precisely at various distances from the high NA optics 11e, in order to spatially lay the optical traps 12 exactly over the rf trapping sites 10.

In calibration step 1, the ions 6 are captured in the rf trap 9, sufficiently cooled by the cooling means 7, and held in place by the rf trapping means 8 in an ordered structure, namely in the primary structure 16, defined by the rf trapping sites 10; for example by carrying out steps 1, 2 and the cooling step of the method according to the present invention. By doing that, the exact positions of the rf trapping sites 10 are defined by the location of the cold ions 6 in the rf trap 9.

In calibration step 2, the fluorescent imaging by the high-resolution camera 14 is applied in order to determine the exact position of the cold ions 6, and thereby the exact position of the rf trapping sites 10, thereby defining an xy plane of the internal coordinate system of the high-resolution camera 14. To image the cold ions 6, the focus of the high-resolution camera 14 is set on the cold ions 6. The imaging is done in this embodiment by using the cooling beam at 422 nm and the repumper beam at 1092 nm.

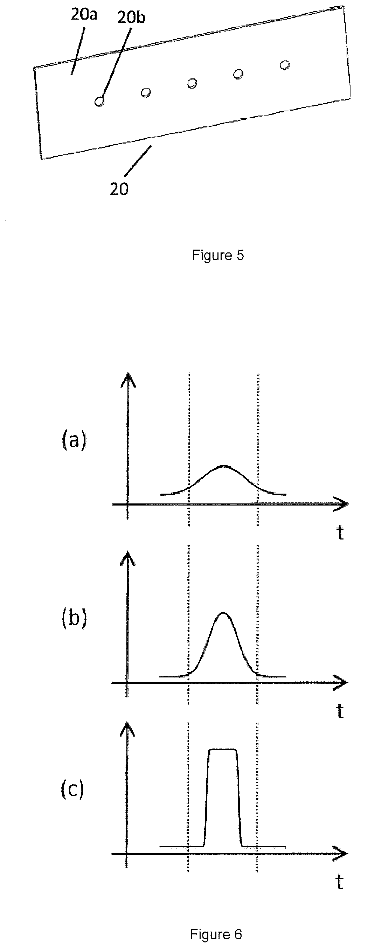

In calibration step 3, the calibration mask 20, shown in Figure 5, is inserted into the rf trapping means 8 along its central axis 8c, so that the central axis 8c lies on the flat surface of the calibration mask 20 and so that the flat surface of the calibration mask 20 is perpendicular to the optical axis of the optical trapping beams 11f coming from the high NA optics 11e to the rf trap 9. Optionally, to place the calibration mask 20 into the exact position, the calibration mask 20 is moved until its image as captured by the high-resolution camera 14 is in focus.

The calibration mask 20 is essentially a thin plate 20a, for example made of glass and thereby transparent, covered by a thin untransparent metal film, with optical holes 20b with known geometry, for example the diameter of about 3 µm, placed equidistantly in a line with a distance of 10µm between the neighboring optical holes 20b. The optical holes 20b may be implemented as actual holes in the plate 20a, or in case the plate is transparent and covered by an untransparent film, by absence of the film where the optical holes 20b should be. In this embodiment the calibration mask 20 has five optical holes 20b.

In calibration step 4, the high-resolution camera 14 captures the image of the calibration mask 20, particularly the position of the optical holes 20b in the calibration mask 20, whereas the surface of the calibration plate 20a is aligned with a correct target plane in which lies the central axis, and whereas the correct target plane is also perpendicular to the optical axis of the optical trapping beams 11f coming from the high NA optics 11e to the rf trap 9. The light for capturing this image can come from a separate source of light or from surrounding light from outside the vacuum chamber 2 that is introduced through an optical port (not shown in Figures). From the image of the optical holes 20b in the correct target plane, the coordinates of the optical holes 20b in the xy plane according to an internal coordinate system of the high-resolution camera 14 are obtained.

In calibration step 5, the xy target plane of an internal coordinate system of the optical trapping means 11 is calibrated with the xy plane of the internal coordinate system of the high-resolution camera 14 and the focus of the optical trapping beam 11f, expressed as z axis in the internal coordinate system of the optical trapping means 11, is calibrated at the exact distance, where the calibration mask 20 and also the correct target plane are positioned.

The optical trapping beam 11f is systematically steered according to its internal coordinate system across the xy target plane, thereby across the calibration mask 20. The steering of the optical trapping beam 11f in the xy target plane is achieved by the AODs 11b. On the other side of the calibration mask 20, the amount of the light from the optical trapping beam 11f coming through the optical holes 20b of the calibration mask 20 is captured by the photodetector 19. Various photodetector signals are shown in Figure 6. The strength of the photodetector signal depends on the position of the optical trapping beam 11f relative to the position of the optical holes 20b of the calibration mask 20, namely when the optical trapping beam 11f shines directly through the optical hole 20b in the calibration mask 20, the photodetector signal is the strongest.

Therefore, the peaks of the photodetector signal indicate the position of the optical holes 20b, which was in calibration step 4 expressed in the xy plane of the internal coordinate system of the high resolution camera 14, now expressed in the xy target plane of the internal coordinate system of the optical trapping means 11, by comparing the strength of the photodetector signal with the position of the optical trapping beam 11f, expressed in the xy target plane.

The shape of the photodetector signal indicates also to what extent the optical trapping beam is focused at the exact distance where the calibration mask 20 and also the correct target plane are positioned. The first photodetector signal (a) in Figure 6 shows that the signal relatively slowly reaches its peak and then descends, because the focus of the optical trapping beam 11f is not yet aligned with the correct target plane. The second photodetector signal (b) in Figure 6 reaches its peak and descends from it more steeply, thereby indicating that the focus of the optical trapping beam 11f is closer to the correct target plane. And the third photodetector signal (c) in Figure 6 has the steepest shape of rising and falling of the signal, thereby indicating that in this scanning the focus of the optical trapping beam 11f is at the same distance, expressed as z coordinate of the internal coordinate system of the optical trapping means 11, as the correct target plane.

The xy target plane, thereby the calibration mask 20, is systematically scanned by the optical trapping beam 11f; however, several scannings of the entire xy target plane is done, whereas each scanning has a different focus of the optical trapping beam 11f, i.e. with a focus at a different distance from the optical trapping means 11. The motorized lens 11c, which operates according to the internal coordinate system of the optical trapping means 11, is used to achieve different focuses of the optical trapping beam 11f. The photodetector signal is observed while the entire target plane is scanned several times by the optical trapping beam 11f, and compared with the position of the optical trapping beam 11f, expressed in xyz coordinates of the internal coordinate system of the optical trapping means 11.

At the end of calibration step 5, the calibration mask 20 is removed from the rf trapping means 8.

In calibration step 6, the exact position of the optical trapping beams 11f, in order to lay the optical traps 12 over the rf trapping sites 10, is determined by transforming the position of the cold ions 6 obtained in calibration step 2, which is expressed in the xy plane of the internal coordinate system of the high resolution camera 14, into the position of the optical trapping beams 11f, which is expressed in the xy target plane, and focusing the optical trapping beams 11f at the same distance, expressed as z coordinate of the internal coordinate system of the optical trapping means 11, as the correct target plane, which was obtained in calibration step 5.

Therefore, the system 1 is calibrated to be used according the above-described method, namely the optical traps 12 can be spatially laid precisely over the rf trapping sites 10.

### LIST OF REFERENCES:

[1] Akerman, N., Glickman, Y., Kotler, S., Keselman, A., & Ozeri, R. (2011, November). Quantum control of 88Sr+ in a miniature linear Paul trap. Applied Physics B, 107, 1167-1174. doi:10.1007/s00340-011-4807-6
[2] Berkeland, D. J. (2002, August). Linear Paul trap for strontium ions. Review of Scientific Instruments, 73, 2856-2860. doi:10.1063/1.1489073
[3] Brownnutt, M. (2007, September). 88Sr+ ion trapping techniques and technologies for QIP. Ph.D. dissertation, Imperial College London. https://www.imperial.ac.uk/media/imperial-college/research-centres-and-groups/ion-trapping/public/Brownnutt-PhD-Thesis-2009.pdf
[4] Dubost, B. (2012). Light-matter interaction with atomic ensembles. Ph.D. dissertation, Université Paris-Diderot - Paris VII; Universitat Politécnica de Catalunya. https://tel.archives-ouvertes.fr/tel-00818499/file/these.pdf
[5] He, R., Cui, J.-M., Li, R.-R., Qian, Z.-H., Chen, Y., Ai, M.-Z., Huang, Y.-F., Li, C.-F., Guo, G.-C. (2021, July). An ion trap apparatus with high optical access in multiple directions. Review of Scientific Instruments, 92, 073201. doi:10.1063/5.0043985
[6] Heazlewood, B. R. (2019, January). Cold ion chemistry within Coulomb crystals. Molecular Physics, 117, 1934-1941. doi:10.1080/00268976.2018.1564850
[7] Hempel, C. (2014). Digital quantum simulation, Schrödinger cat state spectroscopy and setting up a linear ion trap. Ph.D. dissertation, University of Innsbruck (Austria). https://quantumoptics.at/images/publications/dissertation/hempel_diss.pdf
[8] Henriet, L., Beguin, L., Signoles, A., Lahaye, T., Browaeys, A., Reymond, G.-O., & Jurczak, C. (2020, September). Quantum computing with neutral atoms. Quantum, 4, 327. doi:10.22331/q-2020-09-21-327
[9] Karpa, L. (2019). Trapping Single Ions and Coulomb Crystals with Light Fields. Springer International Publishing. doi:10.1007/978-3-030-27716-1
[10] Kaufman, A. M., & Ni, K.-K. (2021, November). Quantum science with optical tweezer arrays of ultracold atoms and molecules. Nature Physics, 17, 1324-1333. doi:10.1038/s41567-021-01357-2
[11] Metcalf, H. J., Straten, P. (1999), Laser cooling and trapping. Springer International Publishing. doi:10.1007/978-1-4612-1470-0
[12] Morgado, M., & Whitlock, S. (2021, June). Quantum simulation and computing with Rydberg-interacting qubits. AVS Quantum Science, 3, 023501. doi:10.1116/5.0036562
[13] Paul, W. (1990, July). Electromagnetic traps for charged and neutral particles. Reviews of Modern Physics, 62, 531-540. doi:10.1103/revmodphys.62.531
[14] Pokorny, F. (2014, March). Experimental setup for trapping strontium Rydberg ions. Master's thesis, Leopold-Franzens University of Innsbruck. https://www.quantumoptics.at/images/publications/diploma/master_pokorny.pdf
[15] Pöschl, A. (2018). Laser Ablation Loading and Single Ion Addressing of Strontium in a Linear Paul Trap. Ph.D. dissertation, KTH, School of Engineering Sciences (SCI). https://kth.diva-portal.org/smash/getldiva2: 1203307/FULL TEXT01.pdf
[16] Schäfer, F., Fukuhara, T., Sugawa, S., Takasu, Y., Takahashi, Y. (2020, July). Tools for quantum simulation with ultracold atoms in optical lattices. Nature Reviews Physics, 2, 411-425. https://doi.org/10.1038/s42254-020-0195-3
[17] Schioppo, M., Poli, N., Prevedelli, M., Falke, S., Lisdat, C., Sterr, U., & Tino, G. M. (2012, October). A compact and efficient strontium oven for laser-cooling experiments. Review of Scientific Instruments, 83, 103101. doi:10.1063/1.4756936
[18] Schlosser, N., Reymond, G., Protsenko, I., & Grangier, P. (2001, June). Sub-poissonian loading of single atoms in a microscopic dipole trap. Nature, 411, 1024-1027. doi:10.1038/35082512
[19] Sriarunothai, T., Giri, G.-S., Woelk., S., Wunderlich, C. (2017, November). Radio frequency sideband cooling and sympathetic cooling of trapped ions in a static magnetic field gradient. Journal of Modern Optics, 65, 560-567. doi:10.1080/09500340.2017.1401137
[20]Thompson, R. C. (2015, January). Ion Coulomb crystals. Contemporary Physics, 56, 1-17. doi:10.1080/00107514.2014.989715
[21]Tomza, M., Jachymski, K., Gerritsma, R., Negretti, A., Calarco, T., Idziaszek, Z., Julienne, P.-S., Cold hybrid ion-atom systems. Reviews of Modern Physics, 91, 035001. doi:10.1103/RevModPhys.91.035001
[22]Vant, K., Chiaverini, J., Lybarger, W., & Berkeland, D. J. (2006, July). Photoionization of strontium for trapped-ion quantum information processing. https://doi.org/10.48550/arxiv.quant-ph/0607055

## Claims

1. System (1) for constructing an array of cold neutral atoms (21) **characterized in that** it comprises:
- a vacuum chamber (2), within which ultra-high vacuum can be achieved;
- an ion source (3) configured for populating the vacuum chamber (2) with positively charged ions (6);
- a radio frequency (rf) trapping means (8), generating a rf trap (9) with a predefined geometry of rf trapping sites (10), configured for capturing free ions into the rf trap (9) and for keeping the cold ions (6) in place within the array with a primary structure (16), defined by the rf trapping sites (10);
- an optical trapping means (11), generating optical traps (12), configured for double trapping already trapped cold ions (6) in the primary structure (16) and for holding the cold ions (6) and/or the cold neutral atoms (21) in place within the primary structure (16);
- a cooling means (7) configured for cooling the ions (6) and/or neutral atoms (21) within the vacuum chamber (2) to sufficiently low temperature, in order for the cold ions (6) and/or cold neutral atoms (21) to be trapped and/or kept in an ordered structure in the rf trapping sites (10) and/or in the optical traps (12);
- a neutralization means (13), comprising a source of electrons (13a) configured for creating a controlled flux of electrons, for neutralizing the cold ions (6) that are trapped and held in place in the primary structure (16) by the optical trapping means (11) and/or by the rf trapping means (8).

2. The system (1) according to claim 1, wherein species of atoms for ions (6) and neutral cold atoms (21) is selected either from alkaline-earth atoms from the second group of periodic system, preferably Strontium (Sr), or alkaline-earth-like atoms, preferably Ytterbium (Yb).

3. The system (1) according to claims 1 through 2, wherein the cooling means (7) is implemented by laser cooling.

4. The system (1) according to claims 1 through 3, wherein the optical trapping means (11) comprise a laser tweezer system (11a).

5. The system (1) according to claims 1 through 4, wherein the optical trapping means (11) is additionally configured for moving each cold neutral atom (21) and/or a group of cold neutral atoms (21) in the primary structure (16) by moving the corresponding optical traps (12) in order to construct an array of cold neutral atoms with a secondary structure (17) and/or a final array (18).

6. The system (1) according to claims 1 through 5, wherein the system (1) comprises a high-resolution camera (14) configured for imaging the cold ions (6) and/or imaging cold neutral atoms (21).

7. The system (1) according to claims 4 through 6, wherein the optical trapping means comprises a dichroic mirror (11d).

8. The system (1) according to claims 1 through 7, wherein the system (1) comprises a photodetector (19).

9. Method of constructing an array of cold neutral atoms (21) with the geometry of a primary structure (16), held in place by optical traps (12) **characterized in that** the method comprises the following steps:
- step 1: controlled release of ions (6) into a vacuum chamber (2), preferably in a beam (5) of ions directed toward rf trapping sites (10);
- step 2: trapping the ions (6) into an rf trap (9), and holding the cold ions (6) in place in the rf trapping sites (10);
- step 3: overlaying the cold ions (6), which are already held in place in the rf trapping sites (10), with the optical traps (12), thereby double-trapping the cold ions (6), and holding the cold ions (6) in place by the optical traps (12);
- step 4: neutralizing the cold ions (6) within the primary structure (16) and thus generating the cold neutral atoms (21) within the primary structure (16);
wherein the method comprises also a cooling step for cooling the ions (6) and/or neutral atoms (21) in order to reduce their kinetic energy (temperature), for the ions (6) to be trapped, achieve a stable structure and to be kept in place in the primary structure (16) by the rf trap (9), and for the cold ions (6) and the cold neutral atoms (21) to be kept in place within the optical traps (12); wherein the cooling step can be continuous or comprise intervals of cooling, and can run simultaneously with the above mentioned four steps and/or can run between or after each of these steps.

10. The method according to claim 9, wherein step 3 is achieved by the optical traps (12) being switched on already during step 1 and/or 2.

11. The method according to claim 9 through 10, wherein the rf trap (9) is switched off immediately before initiating step 4.

12. The method according to claim 9 through 11, wherein after steps 1 through 4 and the colling step additional steps are added for reshaping the primary structure (16) of the cold neutral atoms (21) into a secondary structure (17) and/or into a final array (18) by moving the corresponding optical traps (12).

13. The method according to claim 9 through 12, wherein during or after step 2 a verification step is added by imaging the cold ions (6) in the rf trapping sites (10) and/or in the optical traps (12), and/or an additional verification step is added by imaging the cold neutral atoms (21) in the optical traps (12).

14. The method according to claim 9 through 13, wherein the cooling step is carried out in two intervals: in interval A the ions (6) are cooled close to Doppler temperature limit of about 0.48 mK and in interval B the ions (6) are cooled close to sub-Doppler temperature limit of about 0.2 µK.

15. Calibration method for calibrating a system (1) for constructing an array of cold neutral atoms (21) as defined in claim 1, to adjust the position of the optical traps (12) in order to spatially lay them exactly over the rf trapping sites (10) **characterized in that** the calibration method comprises the following steps:
- calibration step 1: capturing the ions (6) in the rf trap (9), cooling them sufficiently, so that they are held in place by the rf trapping means (8) in an ordered structure, namely in the primary structure (16), defined by the rf trapping sites (10);
- calibration step 2: imaging of the cold ions (6) by a high-resolution camera (14) is applied in order to determine the exact position of the cold ions (6), thereby defining the exact position of the rf trapping sites (10) in an xy plane of an internal coordinate system of the high-resolution camera (14);
- calibration step 3: inserting a calibration mask (20) into the rf trapping means (8) along its central axis (8c), so that the central axis (8c) lies on the flat surface of the calibration mask (20) and so that the flat surface of the calibration mask (20) is perpendicular to the optical axis of optical trapping beams (11f) coming from a high NA optics (11e) to the rf trap (9);
- calibration step 4: capturing the image of the calibration mask (20), particularly the position of optical holes (20b) in the calibration mask (20), thereby obtaining the coordinates of the optical holes (20b) in the xy plane of the internal coordinate system of the high-resolution camera 14;
- calibration step 5: calibrating an xy target plane of an internal coordinate system of the optical trapping means (11) with the xy plane of the internal coordinate system of the high-resolution camera (14), and calibrating the focus of an optical trapping beam (11f), expressed as z axis in the internal coordinate system of the optical trapping means (11), at the exact distance, where the calibration mask (20) and also the correct target plane are positioned; by systematically scanning the xy target plane with the optical trapping beam (11f) several times, each time with a different focus of the optical trapping beam (11f), by observing a photodetector signal, and by comparing the photodetector signal with the position of the optical trapping beam (11f), expressed in xyz coordinates of the internal coordinate system of the optical trapping means 11; whereas at the end of calibration step 5, the calibration mask (20) is removed from the rf trapping means (8);
- calibration step 6: determining the exact position of the optical trapping beams (11f) by transforming the position of the cold ions (6) obtained in calibration step 2, which is expressed in the xy plane of the internal coordinate system of the high resolution camera (14), into the position of the optical trapping beams (11f), which is expressed in the xy target plane, and focusing the optical trapping beams (11f) at the same distance, expressed as z coordinate of the internal coordinate system of the optical trapping means (11), as the correct target plane, which was obtained in calibration step 5.

16. The calibration method according to claim 15, wherein for the imaging of the cold ions (6) in calibration step 2 fluorescent imaging is applied by using a cooling beam at 422 nm and a repumper beam at 1092 nm.

## Patentansprüche

1. System (1) zum Aufbau einer Anordnung von kalten neutralen Atomen (21), **dadurch gekennzeichnet, dass** es umfasst:
- eine Vakuumkammer (2), in der Ultrahochvakuum erreicht werden kann;
- eine Ionenquelle (3), die so ausgelegt ist, dass sie die Vakuumkammer (2) mit positiv geladenen Ionen (6) auffüllt;
- ein Hochfrequenz (hf)-Einfangmittel (8), das eine hf-Falle (9) mit einer vordefinierten Geometrie von hf-Einfangstellen (10) erzeugt, die so ausgelegt ist, dass sie die freien Ionen in der hf-Falle (9) aufnimmt und die kalten Ionen (6) innerhalb der Anordnung mit einer Primärstruktur (16), die durch die hf-Einfangstellen (10) definiert ist, an Ort und Stelle hält;
- ein optisches Einfangmittel (11), das optische Fallen (12) erzeugt, die so ausgelegt sind, dass sie bereits eingefangene kalte Ionen (6) in der Primärstruktur (16) doppelt einfangen und die kalten Ionen (6) und/oder die kalten neutralen Atome (21) in der Primärstruktur an Ort und Stelle (16) halten;
- ein Kühlmittel (7), das so ausgelegt ist, dass es die Ionen (6) und/oder neutralen Atome (21) innerhalb der Vakuumkammer (2) auf eine ausreichend niedrige Temperatur kühlt, damit die kalten Ionen (6) und/oder kalten neutralen Atome (21) in einer geordneten Struktur in den hf-Einfangstellen (10) und/oder in den optischen Fallen (12) eingefangen und/oder gehalten werden;
- ein Neutralisationsmittel (13), das eine Elektronenquelle (13a) umfasst die so ausgelegt ist, dass sie einen kontrollierten Elektronenfluss erzeugt, um die kalten Ionen (6) zu neutralisieren, die in der Primärstruktur (16) durch das optische Einfangmittel (11) und/oder durch das hf-Einfangmittel (8) eingefangen und an Ort und Stelle gehalten werden.

2. System (1) nach Anspruch 1, wobei die Atomspezies für Ionen (6) und neutrale kalte Atome (21) entweder aus Erdalkaliatomen aus der zweiten Gruppe des Periodensystems, vorzugsweise Strontium (Sr), oder aus erdalkaliähnlichen Atomen, vorzugsweise Ytterbium (Yb), ausgewählt ist.

3. System (1) nach den Ansprüchen 1 bis 2, wobei das Kühlmittel (7) durch Laserkühlung ausgeführt wird.

4. System (1) nach den Ansprüchen 1 bis 3, wobei die optischen Einfangmittel (11) ein Laserpinzettensystem (11a) umfassen.

5. System (1) nach den Ansprüchen 1 bis 4, wobei das optische Einfangmittel (11) zusätzlich so ausgelegt ist, dass es jedes kalte neutrale Atom (21) und/oder eine Gruppe von kalten neutralen Atomen (21) in der Primärstruktur (16) durch Bewegen der entsprechenden optischen Fallen (12) bewegt, um eine Anordnung von kalten neutralen Atomen mit einer Sekundärstruktur (17) und/oder einer endgültige Anordnung (18) zu konstruieren.

6. System (1) nach den Ansprüchen 1 bis 5, wobei das System (1) eine hochauflösende Kamera (14) umfasst, die zur Abbildung der kalten Ionen (6) und/oder zur Abbildung von kalten neutralen Atomen (21) ausgelegt ist.

7. System (1) nach den Ansprüchen 4 bis 6, wobei das optische Einfangmittel einen dichroitischen Spiegel (11d) umfasst.

8. System (1) nach den Ansprüchen 1 bis 7, wobei das System (1) einen Photodetektor (19) umfasst.

9. Verfahren zum Aufbau einer Anordnung von kalten neutralen Atomen (21) mit der Geometrie einer Primärstruktur (16), die durch optische Fallen (12) an Ort und Stelle gehalten wird, **dadurch gekennzeichnet, dass** das Verfahren die folgenden Schritte umfasst:
- Schritt 1: gesteuerte Freisetzung der Ionen (6) in einer Vakuumkammer (2), vorzugsweise in einem Ionenstrahl (5), der auf hf-Einfangstellen (10) gerichtet ist;
- Schritt 2: Einfangen der Ionen (6) in einer hf-Falle (9) und Halten der kalten Ionen (6) and Ort und Stelle in den hf-Einfangstellen (10);
- Schritt 3: Überlagern der kalten Ionen (6), die bereits in den hf-Einfangstellen (10) an Ort und Stelle gehalten werden, mit den optischen Fallen (12), wodurch die kalten Ionen (6) doppelt eingefangen werden, und Halten der kalten Ionen (6) an Ort und Stelle durch die optischen Fallen (12);
- Schritt 4: Neutralisieren der kalten Ionen (6) innerhalb der Primärstruktur (16) und somit Erzeugen der kalten neutralen Atome (21) innerhalb der Primärstruktur (16);
wobei das Verfahren auch einen Kühlschritt zum Kühlen der Ionen (6) und/oder neutralen Atome (21) umfasst, um ihre kinetische Energie (Temperatur) zu reduzieren, so dass die Ionen (6) eingefangen werden, um eine stabile Struktur zu erreichen und durch die hf-Falle (9) in der Primärstruktur (16) gehalten zu werden, und dass die kalten Ionen (6) und die kalten neutralen Atome (21) innerhalb der optischen Fallen (12) an Ort und Stelle gehalten werden; wobei der Kühlschritt kontinuierlich sein oder Kühlungsintervalle umfassen kann und gleichzeitig mit den oben genannten vier Schritten ausgeführt werden kann und/oder zwischen oder nach jedem dieser Schritte ausgeführt werden kann.

10. Verfahren nach Anspruch 9, wobei Schritt 3 dadurch erreicht wird, dass die optischen Fallen (12) bereits während Schritt 1 und/oder 2 eingeschaltet werden.

11. Verfahren nach den Ansprüchen 9 bis 10, **dadurch gekennzeichnet, dass** die hf-Falle (9) unmittelbar vor dem Einleiten von Schritt 4 ausgeschaltet wird.

12. Verfahren nach den Ansprüchen 9 bis 11, **dadurch gekennzeichnet, dass** nach den Schritten 1 bis 4 und dem Kaltschritt zusätzliche Schritte zur Umformung der Primärstruktur (16) der kalten neutralen Atome (21) in eine Sekundärstruktur (17) und/oder in eine Endanordnung (18) durch Bewegen der entsprechenden optischen Fallen (12) hinzugefügt werden kann.

13. Verfahren nach den Ansprüchen 9 bis 12, wobei während oder nach Schritt 2 ein Verifikationsschritt durch Abbildung der kalten Ionen (6) in den hf-Einfangstellen (10) und/oder in den optischen Fallen (12) und/oder ein zusätzlicher Verifikationsschritt durch Abbildung der kalten neutralen Atome (21) in den optischen Fallen (12) hinzugefügt wird.

14. Verfahren nach den Ansprüchen 9 bis 13, wobei der Kühlschritt in zwei Intervallen durchgeführt wird: im Intervall A werden die Ionen (6) nahe der Doppler-Temperaturgrenze von etwa 0,48 mK gekühlt und im Intervall B werden die Ionen (6) in der Nähe der Sub-Doppler-Temperaturgrenze von etwa 0,2 µK gekühlt.

15. Kalibrierungsverfahren zum Kalibrieren des Systems (1) zum Aufbau einer Anordnung von kalten neutralen Atomen (21) zur Einstellung der Position der optischen Fallen (12), um sie genau über die hf-Einfangstellen (10) zu legen, **dadurch gekennzeichnet, dass** das Kalibrierungsverfahren die folgenden Schritte umfasst:
- Kalibrierungsschritt 1: Erfassen der Ionen (6) in der hf-Falle (9), wobei sie ausreichend gekühlt werden, so dass sie durch das hf-Einfangmittel (8) in einer geordneten Struktur, nämlich in der Primärstruktur (16), die durch die hf-Einfangstellen (10) definiert ist, an Ort und Stelle gehalten werden;
- Kalibrierungsschritt 2: Abbildung der kalten Ionen (6) durch die hochauflösende Kamera (14) wird angewendet, um die exakte Position der kalten Ionen (6) zu bestimmen, wodurch die genaue Position der hf-Einfangstellen (10) in einer xy-Ebene eines internen Koordinatensystems der hochauflösenden Kamera (14) definiert wird;
- Kalibrierungsschritt 3: Einsetzen einer Kalibriermaske (20) in das hf-Einfangmittel (8) entlang seiner Mittelachse (8c), so dass die Mittelachse (8c) auf der flachen Oberfläche der Kalibriermaske (20) liegt und so dass die flache Oberfläche der Kalibriermaske (20) senkrecht zu der optischen Achse der optischen Einfangstrahlen (11f) ist, die von der hohen NA-Optik (11e) zu der hf-Falle (9) kommen;
- Kalibrierschritt 4: Erfassen des Bildes der Kalibriermaske (20), insbesondere der Position der optischen Löcher (20b) in der Kalibriermaske (20), wodurch die Koordinaten der optischen Löcher (20b) in der xy-Ebene des internen Koordinatensystems der hochauflösenden Kamera (14) erhalten werden;
- Kalibrierschritt 5: Kalibrieren einer xy-Zielebene eines internen Koordinatensystems des optischen Einfangmittels (11) mit der xy-Ebene des internen Koordinatensystems der hochauflösenden Kamera (14) und Kalibrieren des Fokus des optischen Einfangstrahls (11f), ausgedrückt als z-Achse im inneren Koordinatensystem des optischen Einfangsmittels (11), im exakten Abstand, in dem die Kalibriermaske (20) und auch die korrekte Zielebene positioniert sind; durch systematisches mehrmaliges Abtasten der xy-Zielebene mit dem optischen Einfangstrahl (11f), jedes Mal mit einem anderen Fokus des optischen Einfangstrahls (11f), durch Beobachten eines Photodetektorsignals, und durch Vergleichen des Photodetektorsignals mit der Position des optischen Einfangstrahls (11f), ausgedrückt in xyz-Koordinaten des internen Koordinatensystems des optischen Einfangmittels (11); während am Ende des Kalibrierungsschritts 5 die Kalibrierungsmaske (20) von dem hf-Einfangmittel (8) entfernt wird;
- Kalibrierschritt 6: Bestimmen der genauen Position der optischen Einfangstrahlen (11f) durch Transformieren der im Kalibrierschritt 2 erhaltenen Position der kalten Ionen (6), , die in der xy-Ebene des internen Koordinatensystems der hochauflösenden Kamera (14) ausgedrückt wird, in die Position der optischen Einfangstrahlen (11f), die in der xy-Zielebene ausgedrückt wird, und Fokussieren der optischen Einfangstrahlen (11f) mit dem gleichen Abstand, ausgedrückt als z-Koordinate des inneren Koordinatensystems des optischen Einfangmittels (11), wie die korrekte Zielebene, die in Kalibrierungsschritt 5 erhalten wurde.

16. Kalibrierungsverfahren nach Anspruch 15, wobei für die Abbildung der kalten Ionen (6) in Kalibrierungsschritt 2 die Fluoreszenzabbildung unter Verwendung des Kühlstrahls bei 422 nm und des Repumpstrahls bei 1092 nm angewendet wird.

## Revendications

1. Système (1) pour construire un réseau d'atomes neutres froids (21), **caractérisé en ce qu'il** comprend :
- une chambre à vide (2), à l'intérieur de laquelle un vide ultra-élevé peut être obtenu ;
- une source d'ions (3) configurée pour remplir la chambre à vide (2) avec des ions chargés positivement (6) ;
- un moyen de piégeage radiofréquence (rf) (8) générant un piège rf (9) avec une géométrie prédéfinie de sites de piégeage rf (10), configuré pour capturer des ions libres dans le piège rf (9) et pour maintenir les ions froids (6) en place à l'intérieur du réseau avec une structure primaire (16), définie par les sites de piégeage rf (10) ;
- un moyen de piégeage optique (11), générant des pièges optiques (12), configuré pour piéger en double des ions froids (6) déjà piégés dans la structure primaire (16) et pour maintenir les ions froids (6) et/ou les atomes neutres froids (21) en place à l'intérieur de la structure primaire (16) ;
- un moyen de refroidissement (7) configuré pour refroidir les ions (6) et/ou les atomes neutres (21) à l'intérieur de la chambre à vide (2) à une température suffisamment basse, afin que les ions froids (6) et/ou les atomes neutres froids (21) soient piégés et/ou maintenus dans une structure ordonnée dans les sites de piégeage rf (10) et/ou dans les pièges optiques (12) ;
- un moyen de neutralisation (13) comprenant une source d'électrons (13a) configurée pour créer un flux contrôlé d'électrons pour neutraliser les ions froids (6) qui sont piégés et maintenus en place dans la structure primaire (16) par le moyen de piégeage optique (11) et/ou par le moyen de piégeage rf (8).

2. Système (1) selon la revendication 1, dans lequel l'espèce d'atomes pour les ions (6) et les atomes froids neutres (21) sont sélectionnées soit parmi des atomes alcalino-terreux du deuxième groupe du système périodique, de préférence le strontium (Sr), soit des atomes de type alcalino-terreux, de préférence l'ytterbium (Yb).

3. Système (1) selon les revendications 1 à 2, dans lequel le moyen de refroidissement (7) est mis en oeuvre par refroidissement par laser.

4. Système (1) selon les revendications 1 à 3, dans lequel les moyens de piégeage optique (11) comprennent un système de pince laser (11a).

5. Système (1) selon les revendications 1 à 4, dans lequel le moyen de piégeage optique (11) est en outre configuré pour déplacer chaque atome neutre froid (21) et/ou un groupe d'atomes neutres froids (21) dans la structure primaire (16) en déplaçant les pièges optiques correspondants (12) afin de construire un réseau d'atomes neutres froids avec une structure secondaire (17) et/ou un réseau final (18).

6. Système (1) selon les revendications 1 à 5, dans lequel le système (1) comprend une caméra haute résolution (14) configurée pour imager les ions froids (6) et/ou imager des atomes neutres froids (21).

7. Système (1) selon les revendications 4 à 6, dans lequel le moyen de piégeage optique comprend un miroir dichroïque (11d).

8. Système (1) selon les revendications 1 à 7, dans lequel le système (1) comprend un photodétecteur (19).

9. Procédé de construction d'un réseau d'atomes neutres froids (21) avec la géométrie d'une structure primaire (16), maintenue en place par des pièges optiques (12), **caractérisé en ce que** le procédé comprend les étapes suivantes :
- étape 1 : libération contrôlée d'ions (6) dans une chambre à vide (2), de préférence dans un faisceau (5) d'ions dirigés vers des sites de piégeage rf (10) ;
- étape 2 : piégeage des ions (6) dans un piège rf (9) et maintenance des ions froids (6) en place dans les sites de piégeage rf (10) ;
- étape 3 : superposition des ions froids (6) qui sont déjà maintenus en place dans les sites de piégeage rf (10) avec les pièges optiques (12), piégeant ainsi en double les ions froids (6), et maintenance des ions froids (6) en place par les pièges optiques (12) ;
- étape 4 : neutralisation des ions froids (6) à l'intérieur de la structure primaire (16) et ainsi génération des atomes neutres froids (21) à l'intérieur de la structure primaire (16) ;
dans lequel le procédé comprend en outre une étape de refroidissement pour refroidir les ions (6) et/ou les atomes neutres (21) afin de réduire leur énergie cinétique (température), pour que les ions (6) soient piégés, obtiennent une structure stable et soient maintenus en place dans la structure primaire (16) par le piège rf (9), et pour que les ions froids (6) et les atomes neutres froids (21) soient maintenus en place à l'intérieur des pièges optiques (12) ; dans lequel l'étape de refroidissement peut être continue ou peut comprendre des intervalles de refroidissement, et peut fonctionner simultanément avec les quatre étapes mentionnées ci-dessus et/ou peut fonctionner entre ou après chacune de ces étapes.

10. Procédé selon la revendication 9, dans lequel l'étape 3 est obtenue par la mise en marche des pièges optiques (12) déjà pendant l'étape 1 et/ou 2.

11. Procédé selon les revendications 9 à 10, dans lequel le piège rf (9) est éteint immédiatement avant le lancement de l'étape 4.

12. Procédé selon les revendications 9 à 11, dans lequel sont ajoutées, après les étapes 1 à 4 et l'étape de refroidissement, les étapes supplémentaires pour remodeler la structure primaire (16) des atomes neutres froids (21) en une structure secondaire (17) et/ou en un réseau final (18) en déplaçant les pièges optiques correspondants (12).

13. Procédé selon les revendications 9 à 12, dans lequel est ajoutée, pendant ou après l'étape 2, une étape de vérification par imagerie des ions froids (6) dans les sites de piégeage rf (10) et/ou dans les pièges optiques (12), et/ou est ajoutée une étape de vérification supplémentaire par imagerie des atomes neutres froids (21) dans les pièges optiques (12).

14. Procédé selon les revendications 9 à 13, dans lequel l'étape de refroidissement est réalisée en deux intervalles : dans l'intervalle A les ions (6) sont refroidis près de la limite de la température Doppler d'environ 0,48 mK et dans l'intervalle B les ions (6) sont refroidis près de la limite de la température sub-Doppler d'environ 0,2 µK.

15. Procédé d'étalonnage pour étalonner le système (1) afin de construire un réseau d'atomes neutres froids (21) pour ajuster la position des pièges optiques (12) afin de les déposer spatialement exactement sur les sites de piégeage rf (10), **caractérisé en ce que** le procédé d'étalonnage comprend les étapes suivantes :
- étape d'étalonnage 1 : le capturage des ions (6) dans le piège rf (9), le refroidissement desdits ions suffisamment, de sorte qu'ils soient maintenus en place par les moyens de piégeage rf (8) dans une structure ordonnée, à savoir dans la structure primaire (16) définie par les sites de piégeage rf (10) ;
- étape d'étalonnage 2 : l'imagerie des ions froids (6) par une caméra haute résolution (14) est appliquée afin de déterminer la position exacte des ions froids (6), définissant ainsi la position exacte des sites de piégeage rf (10) dans un plan xy d'un système de coordonnées interne de la caméra haute résolution (14) ;
- étape d'étalonnage 3 : l'insertion d'un masque d'étalonnage (20) dans le moyen de piégeage rf (8) le long de son axe central (8c), de sorte que l'axe central (8c) se trouve sur la surface plate du masque d'étalonnage (20) et de sorte que la surface plate du masque d'étalonnage (20) soit perpendiculaire à l'axe optique des faisceaux de piégeage optique (11f) provenant de l'optique NA élevée (11e) vers le piège rf (9) ;
- étape d'étalonnage 4 : le capturage de l'image du masque d'étalonnage (20), en particulier de la position des trous optiques (20b) dans le masque d'étalonnage (20), obtenant ainsi les coordonnées des trous optiques (20b) dans le plan xy du système de coordonnées interne de la caméra haute résolution (14) ;
- étape d'étalonnage 5 : l'étalonnage d'un plan cible xy d'un système de coordonnées interne du moyen de piégeage optique (11) avec le plan xy du système de coordonnées interne de la caméra haute résolution (14), et l'étalonnage du foyer du faisceau de piégeage optique (11f), exprimé en tant qu'axe z dans le système de coordonnées interne du moyen de piégeage optique (11), à la distance exacte où le masque d'étalonnage (20) ainsi que le plan cible correct sont positionnés ; en balayant systématiquement le plan cible xy avec le faisceau de piégeage optique (11f) plusieurs fois, chaque fois avec un foyer du faisceau de piégeage optique (11f) différent, en observant un signal de photodétecteur, et en comparant le signal de photodétecteur à la position du faisceau de piégeage optique (11f), exprimée en coordonnées xyz du système de coordonnées internes du moyen de piégeage optique (11) ; tandis qu'à la fin de l'étape d'étalonnage 5, le masque d'étalonnage (20) est retiré du moyen de piégeage rf (8) ;
- étape d'étalonnage 6 : la détermination de la position exacte des faisceaux de piégeage optique (11f) en transformant la position des ions froids (6) obtenus à l'étape d'étalonnage 2, qui est exprimée dans le plan xy du système de coordonnées interne de la caméra haute résolution (14), en la position des faisceaux de piégeage optique (11f), qui est exprimée dans le plan cible xy, et la focalisation des faisceaux de piégeage optique (11f) à la même distance, exprimée en tant que coordonnée z du système de coordonnées interne du moyen de piégeage optique (11), en tant que plan cible correct, qui a été obtenu à l'étape d'étalonnage 5.

16. Procédé d'étalonnage selon la revendication 15, dans lequel est appliquée, pour l'imagerie des ions froids (6) lors de l'étape d'étalonnage 2, l'imagerie fluorescente en utilisant un faisceau de refroidissement à 422 nm et un faisceau de répupage à 1092 nm.
